# FASCICULE DE BREVET EUROPEEN

(11) **EP 1 029 203 B1**
(45) Date de publication et mention de la délivrance du brevet: **01.08.2001**
(21) Numéro de dépôt: 97944932.9
(22) Date de dépôt: 07.10.1997
(51) Int. Cl.: F24F 12/00

(54) **APPAREIL POUR RENOUVELER L'ATMOSPHERE DES LOCAUX AVEC RECUPERATION D'ENERGIE**
VORRICHTUNG ZUR ERNEUERUNG DER RAUMLUFT MIT ENERGIERÜCKGEWINNUNG
APPARATUS FOR RENEWING THE ATMOSPHERE IN PREMISES WITH ENERGY RECUPERATION

(43) Date de publication de la demande: 23.08.2000
(73) Titulaire: GAU, George, F-13008 Marseille (FR)
(72) Inventeur: GAU, George, F-13008 Marseille (FR)
(74) Mandataire: Marek, Pierre
(86) Numéro de dépôt international: FR9701783
(87) Numéro de publication internationale: WO9918396

(56) Documents cités:
- EP-A- 0 078 783
- WO-A-95/22726
- FR-A- 2 747 181
- US-A- 4 589 476

## Description

La présente invention concerne un appareil utilisable pour le renouvellement de l'air destiné à la respiration humaine. Ce renouvellement étant obtenu par remplacement de l'air vicié à l'intérieur de l'immeuble par de l'air propre extérieur. La combinaison des différentes parties qui le constituent permet de renouveler l'air non seulement des locaux d'habitation mais également des bureaux, des ateliers, des écoles, des hôpitaux ou des locaux à usage commercial.

### ETAT DE L'ART ANTERIEUR

Lorsque l'air extérieur est relativement propre, la méthode traditionnelle de dépollution des locaux consiste à renouveler l'air par aération (ouverture des fenêtres) ou circulation forcée du type ventilation mécanique contrôlée (VMC). L'inconvénient principal de ces méthodes, en plus des problèmes de poussières et de bruit, est le coût énergétique du renouvellement, l'air intérieur étant typiquement à 22°C tandis que l'air extérieur peut être à -5°C (hiver) ou + 32°C (été).

On a proposé, mais uniquement pour des locaux de très grand volume, de récupérer l'énergie des effluents gazeux, à l'aide d'appareils dérivés du préchauffeur Ljungstrom, un système continu et régénératif utilisant un rotor et une séparation de l'air chaud et de l'air froid avec des joints appropriés.

Initialement ce type d'appareil était réservé à des applications industrielles (rotor de 7 m de diamètre et température de l'air chaud pouvant atteindre 800°C): voir "Chemical Engineers' Handboock, section 9, Heat Generation and Transport".

Le principe fondamental des échangeurs régénératifs, cycliques, à inversion de flux est identique pour les appareils continus à rotor et pour les appareils équipés de deux bacs fixes et d'un système de vannes ou volets activés périodiquement. Ce principe a été illustré dans le livre : W.M. Kays and A.L. London "Compact Heat Exchangers", 2^{nd} Edition. McGraw-Hill, New York, 1964, (voir p. 27) ainsi que dans la première édition publiée en 1952. Cependant à l'échelle industrielle, on n'avait jamais recherché à réduire simultanément le volume des échangeurs, le coût énergétique et le coût d'investissement de ces appareils ainsi que leur niveau sonore, la quantité de calories récupérables (températures élevées et/ou débits très importants) était en effet compatible avec ces coûts et ces nuisances.

Ces réductions simultanées sont un facteur essentiel pour qu'un appareil ait un prix acceptable pour les applications qui concernent plus directement les personnes qui ont besoin d'air purifié, c'est-à-dire que pour la dépollution des locaux, le coût unitaire du m3 doit être très bas.

Plusieurs tentatives ont été effectuées pour réduire ces coûts et nuisances.

Par exemple, dans le document GB-A-1.581.262, est décrit un dispositif dans lequel l'utilisation d'un appareil à rotor est maintenue mais dont la caractéristique innovante serait constituée par la nature du garnissage, constitué de feuilles d'aluminium lisses alternant avec des feuilles d'aluminium ondulées, ce qui définit une pluralité de canaux. Les parois de ces canaux peuvent être enduites de sels hygroscopiques, ce qui permettrait de récupérer à la fois l'énergie et l'humidité de l'air vicié. Mais la conduction thermique, le long des parois des canaux, nuit grandement à l'efficacité thermique ; par ailleurs l'utilisation de canaux de très faible diamètre opérant en régime laminaire devrait avoir pour conséquence des bouchages, soit par la condensation de l'eau, soit par le dépôt de poussières.

Le document EP-A-0.078.783 divulgue un système à deux accumulateurs et deux vannes d'inversion, mais ne revendique qu'une amélioration du système de tuyauteries et de purge permettant de minimiser le recyclage partiel de l'air vicié refroidi. Aucune précision sur les éléments des garnissages et sur leur disposition n'est indiquée.

Le document EP-A-0.128.188 est également basé sur un système à deux bacs, mais la notion de bacs est remplacée par celle de tuyauteries cylindriques horizontales de rapport longueur/diamètre relativement grand. Le garnissage préconisé est le même (canaux de petit diamètre obtenus avec des feuilles d'aluminium lisses et ondulées) que dans le document GB-A-1.581.262 déjà cité.

Dans ces conditions, on ne peut pas estimer que le document WO 95/22726 déposé par le même auteur et qui reprend toutes les caractéristiques du brevet précédent, apporte une innovation quant à la structure de l'appareil ou des garnissages. Différentes applications de cet appareil sont citées, toutes ces applications relevant de la technique de la saturation adiabatique déjà répertoriées dans l'art antérieur.

Signalons qu'un brevet français FR-A-2.747.181 a été octroyé à l'auteur de la présente demande (date de publication 10.10.1997) sur le même sujet mais sans revendication d'antériorité.

De même, le brevet européen 0.607.379 a été octroyé à l'auteur de la présente Demande : une partie importante de ce brevet soulignait le rôle des fils ou toiles métalliques constituées de métaux bons conducteurs de la chaleur (par exemple aluminium, cuivre ou fer galvanisé) placés perpendiculairement au flux gazeux, dans l'augmentation de l'efficacité de la récupération de chaleur.

La généralisation de ce phénomène à l'appareil décrit dans cette application, combinée à la disposition des deux bacs et des grilles horizontales permettant la condensation de l'humidité sous forme de micro-gouttes et leur vaporisation partielle ou totale quand le flux de l'air est inversé, est logiquement la meilleure combinaison souhaitable.

Cette invention souligne donc que, par la combinaison de différents moyens, on peut obtenir simultanément une réduction importante du volume de l'appareil, de sa consommation d'énergie et de son coût d'investissement et, par conséquent, obtenir un système à bas prix qui peut être installé à proximité des personnes (maison, atelier, école, commerce, etc.).

Comme nous le verrons dans l'exposé qui suit, cette réduction importante des coûts, telle qu'elle résulte de la présente invention permet non seulement de concevoir un appareil électroménager de bas prix, mais également un appareil capable de traiter de plus grands débits d'air pour des locaux plus importants. En d'autres termes, les appareils selon l'invention peuvent purifier des débits d'air compris entre 100 m3/heure et 20 000 m3/heure et les principes de leur construction sont identiques dans ces deux cas extrêmes.

les détails caractéristiques de ce purificateur sont indiqués clairement dans la description qui suit et dans le dessin qui l'accompagne à titre d'illustration et utilisant les mêmes signes de référence.

### DESCRIPTION DU DESSIN DE L'INVENTION

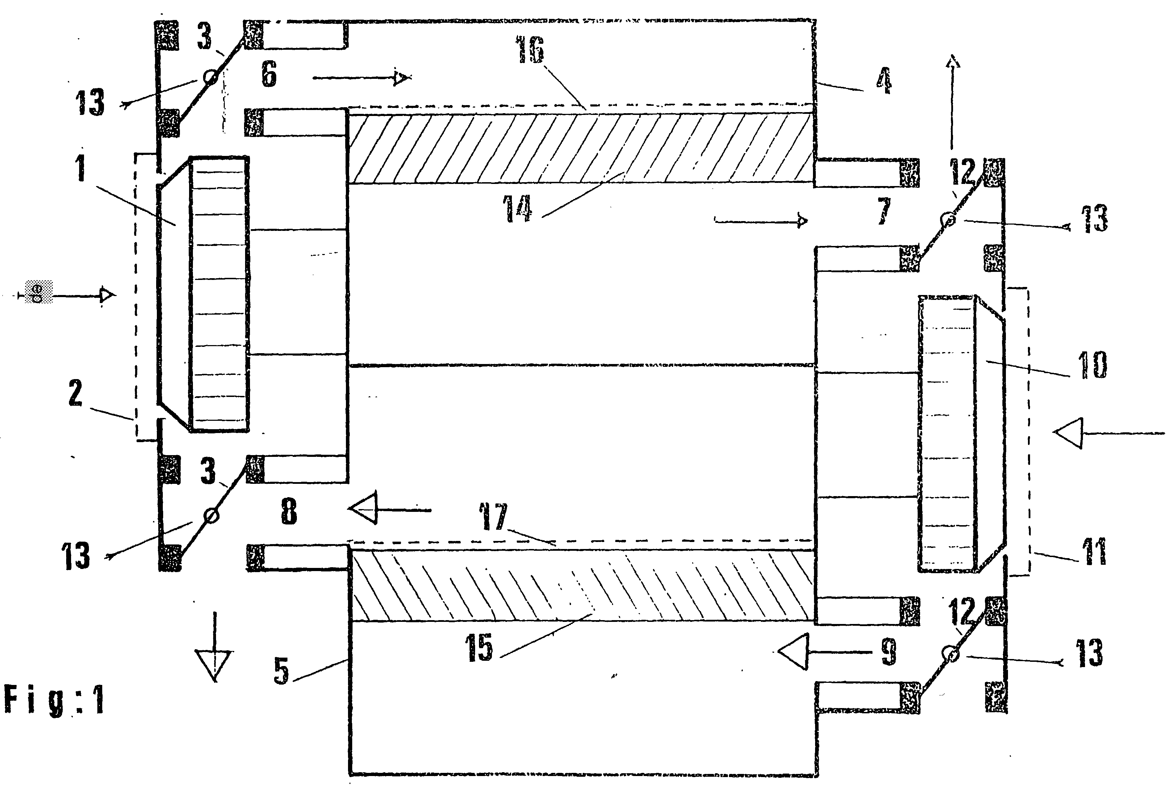

La figure 1 montre le schéma de principe du purificateur.

### DESCRIPTION DETAILLEE DE L'INVENTION.

Un ventilateur 1, muni d'un filtre 2 destiné à éliminer les poussières, les particules en suspension, etc... souffle l'air à purifier (air vicié) provenant de l'immeuble lui-même et est équipé de deux électrovannes 3 qui, par action d'un programmateur cyclique 13 permettant d'introduire cet air à l'un ou l'autre des deux bacs 4 et 5. Dans la position indiquée dans la figure correspondant à la première moitié du cycle, l'air entre en 6 en haut du premier bac et sort en bas en 7. Dans la deuxième moitié du cycle, après l'inversion des électrovannes, l'air vicié entre en haut du deuxième bac 8 et en sort en bas, en 9.

L'air propre, actionné par un deuxième ventilateur 10, également équipé d'un filtre 11 et de deux électrovannes 12 circule en sens inverse (de part en haut), dans le bac non alimenté en air vicié. Le programmateur cyclique est programmé pour établir deux demi-cycles de durée, rigoureusement identique.

Chacun des deux bacs est partiellement rempli par un empilement de toiles métalliques 14 et 15. Ces empilements jouent le rôle d'échangeurs de chaleur ou plus exactement d'accumulateurs. L'air qui traverse un empilement pendant un demi-cycle cède ou récupère une partie très importante de l'enthalpie accumulée dans le métal pendant le demi-cycle précédent.

La propriété essentielle de l'appareil selon l'invention est de minimiser l'énergie consommée par les ventilateurs 1 et 10 et par conséquent leur niveau sonore et cela sans préjudice pour la récupération d'énergie et sans augmentation du coût d'investissement.

Pour atteindre ce résultat, on a trouvé que le système d'échange de chaleur (sections14 et 15) devait satisfaire aux conditions suivantes :
a) Augmentation de l'efficacité de l'échange de chaleur grâce à l'utilisation d'un garnissage de grande surface spécifique (mètres carrés de surface par mètre cube de garnissage). Cela ne peut être obtenu que par utilisation de fils métalliques de petit diamètre d'un matériau relativement inoxydable. L'efficacité d'un garnissage est définie en termes scientifiques, par le NTU (Number of Transfer Units), c'est-à-dire Nombre d'unités de Transfert, par unité de longueur. Pour une même longueur du garnissage, l'échauffement et le refroidissement seront d'autant plus grand que la valeur du NTU est grande;
   Avec les fibres métalliques, de très petit diamètre, on peut augmenter cette efficacité et réduire ainsi la longueur de garnissage nécessaire mais il en résulte une perte de pression dans le garnissage trop élevée, ce qui n'est pas compatible avec les critères mentionnés, relatifs à un appareil économique et de faible niveau acoustique.
b) On a trouvé que le meilleur compromis entre volume, efficacité thermique et perte de charge s'obtient à l'aide de garnissages de porosité volumique relativement élevée (75 à 95 %) constitués de fils d'un diamètre, ni trop petit, ni trop grand, compris entre 0,1 mm et 1 mm.
c) La fréquence du cycle d'inversion de flux doit être élevée et dans tous les cas supérieure à 60 cycles à l'heure.
d) Il est également indispensable que les fils métalliques qui constituent le garnissage soient placés dans une position globalement perpendiculaire au flux de l'air. De préférence, on utilise des toiles métalliques, coupées en forme de grilles de section carrée (ou rectangulaire).

Comme cela ressortira de la description ci-après des exemples illustratifs, quand ces conditions sont satisfaites, on obtient un appareil qui combine les caractéristiques suivantes :

Sa perte de pression ainsi que le coût des ventilateurs et le niveau acoustique sont faibles.

Son efficacité thermique est élevée.

L'efficacité thermique peut être définie par référence à un échangeur classique continu à contre-courant. Les différences de température entre le fluide chaud et le fluide froid aux deux extrémités de cet échangeur équivalent, ne devrait pas dépasser 2°C ou 3°C. On relèvera, dans les exemples qui suivent, quelles sont, dans ces conditions, les différences d'enthalpie entre l'air rejeté à l'extérieur et l'air introduit à l'intérieur. Il faut toutefois souligner que dans le cas de l'accumulateur cyclique les températures des deux fluides (vicié et propre) à la sortie de l'appareil évoluent au cours du temps, pendant un demi-cycle. Les différences de température mentionnées (2°C ou 3°C) représentent donc la moyenne entre les écarts au début et à la fin d'un demi-cycle.

On obtient donc une efficacité thermique élevée combinée à une faible perte de charge grâce au choix des caractéristiques des toiles métalliques et à la fréquence élevée d'inversion du flux gazeux. Ce phénomène avait été revendiqué précédemment par l'auteur de la présente Demande ; la revendication avait été présentée dans le Brevet EP 0.607.379 du 6 Juillet 1993 mais elle concernait un appareil catalytique opérant à température relativement élevée destiné à détruire les polluants.

Les deux empilements de toiles métalliques et la couche catalytique étaient disposés en série, ce qui, associé à la nécessité d'obtenir une efficacité thermique encore plus élevée (le nombre de grilles par empilement étant plus du double de celui actuellement revendiqué), entraînait une perte de charge totale dans les trois couches, supérieure de 4 à 5 fois à la perte de charge des empilements 14 ou 15. Une perte de charge élevée est favorable à l'obtention de profils de vitesse relativement plats dans une section transversale et par conséquent des profils de température également plats et cela bien que les conditions régnant à l'entrée et à la sortie des empilements ne soient pas idéales (changement de direction en particulier).

Les données présentées dans l'art antérieur ne permettaient donc pas de conclure que le choix des caractéristiques des toiles et le choix de la fréquence d'inversion seraient identiques dans les deux cas.

Pour minimiser la distorsion des profils de vitesse dans une section de l'empilement, les essais préliminaires ont conduit à adopter le géométrie de l'appareil présentée dans la figure 1. L'espace libre dans chaque bac, au dessus et au-dessous de l'empilement, est relativement important, supérieur au volume de l'empilement lui-même, et l'air entre dans ce volume horizontalement grâce au volet des électrovannes qui joue également le rôle d'un déflecteur. Par ailleurs, au-dessus de chaque empilement, on dispose un distributeur spécifique consistant en une plaque perforée d'environ 60 trous dont les diamètres peuvent être différents les uns des autres ; l'exemple 4 indiquera comment on détermine les diamètres de ces trous.

Mais l'effet du distributeur serait annulé si on ne respectait pas rigoureusement le principe fondamental de construction d'un appareil "symétrique" : après l'inversion de flux, les conditions aérauliques en amont et en aval de l'empilement doivent rester identiques.

De même, le gain important résultant du rapport très élevé entre la conductivité radiale et la conductivité axiale de ces empilements, phénomène déjà mentionné dans la demande précédente serait en grande partie annulé si les conditions précédentes n'étaient pas remplies.

La réduction des perturbations dans les espaces vides et la correction des perturbations résiduelles grâce aux deux distributeurs spécifiques 16 et 17 imposent de façon pratiquement unique le dessin de l'appareil. L'utilisation de deux bacs superposés 4 et 5 qui permet de réduire l'encombrement total tout en contribuant à l'établissement des conditions aérauliques "symétriques" est donc indispensable ou du moins extrêmement souhaitable.

On a construit un appareil unique conforme au schéma de la figure 1 équipé de deux distributeurs spécifiques définis par la procédure de l'exemple 4 et dont les caractéristiques principales sont les suivantes
Section des bacs : 30 cm x 30 cm
Nature des empilements : toile acier galvanisé type moustiquaire, ouverture nominale 1,5 mm, diamètre des fils 0,315 mm, porosité volumique 84 %.
Hauteur des empilements : environ 7 cm pour 100 grilles de 0,63 mm d'épaisseur.
Surface métallique d'un empilement : 12,3 m2
Hauteur des espaces vides : 10 cm et 10 cm
Diamètre des turbines des ventilateurs : 20 cm
Vitesse de rotation : 2475 tr/mm
Débit d'air : 400 m3/h (22°C, 1 Bar) (on néglige la variation de débit avec la teneur en eau).
Fréquence d'inversion du flux : dans tous les exemples qui suivent, cette fréquence était de 6 cycles complets par minute, c'est-à-dire qu'un demi-cycle durait 10 secondes.

### EXEMPLE 1

### RECUPERATION DES CALORIES DE L'AIR VICIE

Cet exemple correspond au fonctionnement en hiver. Air vicié : 22°C, humidité relative (HR) 60 %, enthalpie totale pour 400 m3, 31700 Kjoules (KJ), Air frais : 0°C, HR 100 %, soit enthalpie : 13100 KJ.

On a mesuré les grandeurs suivantes :
Air vicié refroidi : 3°C, HR 100 % soit enthalpie 15900 KJ.
Air frais préchauffé : 20°C, HR 50 % soit enthalpie 27200 KJ.

Le bilan enthalpique fait apparaître un déficit apparent de 1795 KJ/h qui ne sont pas transférés à l'air frais, ce "déficit" est même égal à 2500 KJ si on tient compte des 720 KJ dégagés par les deux ventilateurs.

L'explication est simple : pendant un demi-cycle, l'air vicié condense sur les fils des toiles métalliques environ 8,2 g d'eau dans chacun des bacs, dont les 2/3 sont revaporisés par l'air frais dans le demi-cycle suivant. Il y a un écoulement de l'eau vers le bas (et c'est la raison principale du choix de l'écoulement vertical de haut en bas pour l'air vicié). La quantité recueillie dans le fond du bac est de 8,2/3 = 2,7 g par cycle complet soit 985 g/h.

Une quantité égale est recueillie dans le deuxième bac. L'eau condensée est éliminée par l'intermédiaire de deux siphons.

On voit donc que l'entraînement vers le bas d'une partie de l'eau condensée permet de déshumidifier le local puisque dans le cas étudié 24 litres d'eau seraient ainsi éliminés chaque jour. En vérité le rendement de la déshumidification doit être évalué autrement :

Les 400 m3/h d'air frais à la sortie de l'appareil contiennent 1,47 litres d'eau en moins que l'air vicié, ce qui veut dire que le rendement vrai est de 35 litres/jour.

De même le rendement thermique global est le suivant
consommation de 0,2 KW des ventilateurs, consommation de 0,27 KW pour ramener la température de l'air frais à la température du local par chauffage classique (c'est-à-dire échauffement de 20°C à 22°C). Il en coûterait 3 KW (plus l'énergie d'un ventilateur de ventilation mécanique contrôlée) pour effectuer le renouvellement et le chauffage sans utiliser l'appareil selon l'invention et l'air introduit serait trop sec (ce qui conduirait à utiliser un humidificateur plus un complément de chauffage pour compenser le refroidissement associé à la saturation adiabatique).

En d'autres termes, l'appareil selon l'invention permet d'éliminer les polluants atmosphériques sans trop éliminer l'humidité contenue dans l'air du local.

### EXEMPLE 2

### RECUPERATION DES FRIGORIES DE L'AIR VICIE

Cet exemple correspond au fonctionnement en été. L'air vicié à l'entrée de l'appareil (à l'aspiration du ventilateur) est à 22°C, HR 90 %, l'air extérieur est à 32°C, HR 90 % également à l'aspiration du ventilateur.
on a mesuré les grandeurs suivantes :
Air vicié réchauffé : 30°C, HR 90 %,
Air frais prérefroidi : 24°C, HR 100 %.

En tenant compte des 720 KJ/h (200 watts) dégagés par les deux ventilateurs, le bilan enthalpique est globalement satisfaisant. On n'observe pas de condensation dans les fonds des bacs.

L'air chaud extérieur perd 4,15 KW en traversant l'échangeur, soit un gain de 3,95 KW, si on déduit l'énergie consommée par les ventilateurs. Le climatiseur nécessaire pour compenser cette énergie thermique devrait avoir une puissance mécanique de 1,5 KW, ce qui représente un appareil dont le coût opératoire, l'investissement et le coût d'installation sont élevés.

On notera que l'air qui contient la plus forte teneur en eau circule cette fois de bas en haut, c'est-à-dire que l'eau condensée n'est pas entraînée vers les fonds des bacs mais revaporisée sur les garnissages. 14 g d'eau sont condensés à chaque passage mais si on tient compte de la surface totale des fils d'un garnissage (12,3 m2), la couche de condensat est d'environ 0,002 mm à la fin d'un demi-cycle, soit 0,6 % du diamètre des fils.

Les raccordements de l'appareil ne sont donc pas différents pour le fonctionnement en été ou en hiver ; la différence principale est que les fonds des bacs et les siphons se maintiennent secs.

### EXEMPLE 3

### FONCTIONNEMENT DANS DES CONDITIONS CLIMATIQUES INTERMEDIAIRES.

Sans modifier les branchements, l'appareil peut également fonctionner lorsque l'air extérieur est à une température et à une humidité relative intermédiaires entre les deux cas précédents, et cela qu'il y ait ou non présence d'eau liquide dans les fonds des bacs.

Lorsqu'il en est ainsi, on obtient soit un rendement thermique intermédiaire ou, plus simplement, lorsque les températures et les humidités extérieures sont voisines, une ventilation mécanique à double flux. Ce système de ventilation est souvent préconisé, mais rarement utilisé jusqu'ici pour de petites installations, alors qu'il permettrait de supprimer la dépression du logement tout en utilisant des filtres à particules qui contribuent à maintenir le logement propre.

Ce système à double flux est plus efficace, ce qui est également le cas pour les exemples précédents. Si l'air vicié est prélevé dans une pièce polluée (cuisine par exemple) et refoulé dans une pièce propre (salle de séjour ou chambre).

En général, on équipe le ventilateur de l'air extérieur avec un filtre de fibres qui peut être lavé dans un lave vaisselle ; on notera cependant que l'inversion cyclique du flux gazeux contribue beaucoup, par effet de décolmatage, à la propreté des empilements de grilles.

### EXEMPLE 4

### CARACTERISTIQUES DES DISTRIBUTEURS SPECIFIQUES

Les deux distributeurs spécifiques 16 et 17, placés au-dessus des empilements de grilles sont constitués, chacun, par une plaque percée d'environ 60 trous équidistants mais dont les diamètres peuvent être différents les uns des autres.

En effet, l'efficacité de l'appareil suivant l'invention peut être améliorée si on redéfinit le diamètre des trous par la procédure suivante.

En l'absence de plaque perforée, on note la perte de charge à travers l'empilement. Pour 400 m3/h et 60 grilles, cette perte de charge est de 11 mm-eau (10,8 Pa). On adjoint la plaque percée de 60 trous identiques de 3,5 cm de diamètre. On augmente la vitesse de rotation du ventilateur pour que le débit d'air soit à nouveau égal à 400 m3/h. La perte de charge du distributeur + empilement est égale à 14 mm-eau, une augmentation de 3,0 mm-eau.

On remplace le distributeur par une résistance électrique de 30 Ohms constituée de fils équidistants disposés horizontalement ; la longueur totale de la résistance est supérieure à 30 fois la dimension de l'empilement, c'est-à-dire que chaque section élémentaire du haut de l'empilement reçoit le même flux thermique.

L'échauffement moyen de l'air (mesuré à la sortie de l'appareil) est égal à 15,6°C, mais un thermocouple déplacé horizontalement, suivant deux axes, à la sortie de l'empilement permet d'observer des différences de températures, ce qui correspond à des différences de débit sur les sections élémentaires.

Grâce à ses données, on calcule quel devrait être le diamètre de chacun des trous du distributeur qui permettrait de ramener le débit élémentaire au débit moyen. Dans la pratique, on ne recalcule pas les 60 diamètres mais on regroupe par famille de 6 trous en utilisant le débit moyen correspondant à cet ensemble.

L'exemple 1 avait été obtenu avec un distributeur calculé ainsi. En l'absence de distributeur, pour obtenir le même rendement, le nombre de grilles a du être multiplié par 2,2, ce qui a conduit à une perte de charge de 24 mm-eau au débit de 400 m3/h obtenu grâce à l'augmentation de la vitesse du ventilateur à 3300 tr/mm. Le volume sonore étant trop élevé, il s'est avéré indispensable de réduire le débit traité.

Le distributeur ainsi obtenu joue le même rôle dans les deux demi-cycles puisque les trajets aérauliques présentent les mêmes caractéristiques avant ou après l'inversion.

## Revendications

1. Appareil pour renouveler l'air d'un local, comprenant un échangeur de chaleur pour récupérer une partie de l'enthalpie de l'air vicié et de la transmettre à l'air propre grâce à un stockage périodique de cette enthalpie, l'échangeur de chaleur étant constitué par deux bacs (4, 5) équipés chacun d'un empilement (14, 15) de toiles métalliques disposées horizontalement et ayant une conductivité thermique horizontale beaucoup plus grande que verticale, et d'un bac pour recueillir et éliminer l'eau condensée, un ventilateur centrifuge (1) pour mettre en circulation l'air vicié à travers l'empilement (14, 15) perpendiculairement aux toiles métalliques, de haut en bas, un ventilateur (10) pour circuler l'air propre à travers l'empilement (14, 15) perpendiculairement aux toiles métalliques, de bas en haut, et un programmateur cyclique d'inversion (13), comprenant quatre électrovannes (3, 12) qui orientent pour des durées d'un demi-cycle l'air vicié et l'air propre vers l'un ou l'autre des deux bacs, la fréquence d'inversion étant supérieure à une inversion par minute et les toiles métalliques ayant une porosité de 75 à 95 % et étant constituées de fils d'un diamètre compris entre 0,1 mm et 1 mm.

2. Appareil suivant la revendication 1, caractérisé en ce que les deux bacs sont superposés et alimentés horizontalement en air vicié (6, 8) ou propre (7, 9) tout au long de l'un des côtés de leur section carrée ou rectangulaire, cette orientation étant obtenue grâce à un déflecteur qui peut être le volet de l'électrovanne ,cette disposition permettant de mieux répartir l'air sur toute la section des empilements.

3. Appareil suivant la revendication 2, caractérisé en ce que les alimentations horizontales d'air ainsi réalisées (6, 8, 7, 9) circulent dans des espaces vides dont les volumes sont supérieurs aux volumes des empilements et que la symétrie de sa construction permette d'obtenir des trajets aérauliques essentiellement identiques pour les deux circuits d'air vicié et les deux circuits d'air propre.

4. Appareil suivant l'une quelconque des revendications 1 à 3, caractérisé en ce que l'on dispose, au-dessus de chacun des deux empilements, une plaque (16, 17) perforée de nombreux trous de diamètre différents, ce distributeur étant destiné à aplatir les profils de vitesse et de température à l'intérieur des empilements.

## Claims

1. Device for renewing the air in premises, comprising a heat exchanger to recover part of the enthalpy of the stagnant air, and to transmit it to the clean air, by means of periodic storage of this enthalpy, the heat exchanger consisting of two tanks (4, 5), each of which is equipped with a stack (14, 15) of metal plates, which are disposed horizontally, and have horizontal thermal conductivity which is far greater than their vertical conductivity, and with a container to receive and eliminate the condensed water, a centrifugal fan (1), to circulate the stagnant air through the stack (14, 15), perpendicularly to the metal plates, from top to bottom, a fan (10) to circulate the clean air through the stack (14, 15), perpendicularly to the metal plates, from bottom to top, and a cyclical inversion programmer (13), comprising four solenoid valves (3, 12), which, for durations of a half-cycle, direct the stagnant air and the clean air towards one or the other of the two tanks, the frequency of inversion being greater than one inversion per minute, and the metal plates having porosity of 75% to 95%, and consisting of wires with a diameter of between 0.1 mm and 1 mm.

2. Device according to claim 1, characterised in that the two tanks are superimposed, and are supplied horizontally with stagnant air (6, 8) or clean air (7, 9), along the entire length of one of the sides of their square or rectangular cross-section, this orientation being obtained by means of a deflector, which can be the shutter of the solenoid valve, this arrangement making it possible to distribute the air better throughout the entire cross-section of the stacks.

3. Device according to claim 2, characterised in that the horizontal supplies of air thus provided (6, 8, 7, 9) circulate in empty spaces, the volumes of which are greater than the volumes of the stacks, and the symmetry of its construction makes it possible to obtain ventilation paths which are substantially identical for the two stagnant air circuits and the two clean air circuits.

4. Device according to any one of claims 1 to 3, characterised in that, above each of the two stacks, there is disposed a plate (16, 17), which is provided with many holes with different diameters, this distributor being designed to flatten the profiles of speed and temperature within the stacks.

## Patentansprüche

1. Vorrichtung zum Erneuern der Luft in einem Raum, umfassend einen Wärmetauscher zum Zurückgewinnen eines Teils der Enthalpie der verbrauchten Luft und zu deren Übertragung auf die frische Luft über eine periodische Speicherung dieser Enthalpie, wobei der Wärmetauscher aus zwei Behältern (4, 5) besteht, die jeweils mit einem Stapel (14, 15) aus horizontal angeordneten Metalldrahtgeweben versehen sind, die eine wesentlich höhere horizontale als vertikale Wärmeleitfähigkeit aufweisen, sowie aus einem Behälter zum Auffangen und Eliminieren des Kondenswassers, einem Zentrifugalgebläse (1), um die verbrauchte Luft senkrecht zu den Metalldrahtgeweben von oben nach unten durch die Stapel (14, 15) zirkulieren zu lassen, einem Ventilator (10), um die frische Luft senkrecht zu den Metalldrahtgeweben von unten nach oben durch die Stapel (14, 15) zirkulieren zu lassen, und einer zyklischen Umsteuereinrichtung (13), die vier Elektroventile (3, 12) umfasst, welche für die Dauer von jeweils einem halben Zyklus die verbrauchte Luft und die frische Luft zu dem einen oder dem anderen der beiden Behälter hin lenken, wobei die Umsteuerfrequenz größer ist als eine Umsteuerung pro Minute und die Metalldrahtgewebe eine Porosität von 75 bis 95% aufweisen und aus einem Draht mit einem Durchmesser zwischen 0,1 mm und 1 mm gebildet sind.

2. Vorrichtung nach Anspruch 1,
dadurch gekennzeichnet, daß die beiden Behälter übereinander angeordnet sind und die verbrauchte (6, 8) oder frische Luft (7, 9) über die gesamte Länge einer der Seiten ihres quadratischen oder rechtwinkligen Querschnitts horizontal zugeführt wird, wobei die Ausrichtung dank eines Deflektors erreicht wird, der aus der Klappe des Elektroventils bestehen kann, wobei diese Anordnung eine bessere Verteilung der Luft über den gesamten Abschnitt der Stapel ermöglicht.

3. Vorrichtung nach Anspruch 2,
dadurch gekennzeichnet, daß die auf diese Weise erzeugten horizontalen Luftzufuhren (6, 8, 7, 9) in den leeren Räumen zirkulieren, deren Volumina größer sind als die Volumina der Stapel, und dadurch, daß die Symmetrie der Konstruktion die Erzeugung lufttechnischer Strecken ermöglicht, die für die beiden Kreisläufe der verbrauchten Luft und die beiden Kreisläufe der frischen Luft im wesentlichen identisch sind.

4. Vorrichtung nach einem der Ansprüche 1 bis 3,
dadurch gekennzeichnet, daß über jedem der beiden Stapel eine Platte (16, 17) angeordnet ist, die durch zahlreiche Öffnungen unterschiedlichen Durchmessers durchbrochen ist, wobei diese Verteileinrichtung dazu bestimmt ist, das Geschwindigkeits- und Temperaturprofil im Inneren der Stapel abzuflachen.
